# EUROPÄISCHE PATENTSCHRIFT

(11) **EP 1 586 771 B1**
(45) Veröffentlichungstag und Bekanntmachung des Hinweises auf die Patenterteilung: **18.01.2017**
(21) Anmeldenummer: 05102275.4
(22) Anmeldetag: 31.10.2002
(51) Int. Cl.: F03D 9/00, E04H 9/04, G21C 13/02

(54) **Windpark zum Schutz eines innerhalb des Windparks liegenden Gebäudes**
Windpark protecting a building situated within the windpark
Parc d'éoliennes protégeant un bâtiment situé dans le parc

(30) Priorität: 01.11.2001 DE 10153403
(43) Veröffentlichungstag der Anmeldung: 19.10.2005
(62) Teilanmeldung aus: 02785341.5
(73) Patentinhaber: Wobben Properties GmbH, 26607 Aurich (DE)
(72) Erfinder: Wobben, Aloys, 26607 Aurich (DE)
(74) Vertreter: Eisenführ Speiser

(56) Entgegenhaltungen:
- DE-A- 2 928 765
- DE-C- 736 723
- DE-U- 20 019 789
- DE-U- 20 118 797
- US-A- 4 265 086

## Beschreibung

Die Erfindung betrifft einen Windpark. Windparks bestehen aus einer Vielzahl von Windenergieanlagen und sind bereits seit langem bekannt. Solche Windparks zeichnen sich regelmäßig dadurch aus, dass mehrere Windenergieanlagen in einem Energieverbund auf einer Fläche stehen und die von den Windenergieanlagen erzeugte elektrische Energie bevorzugt über einen gemeinsamen Netzanschlusspunkt in das Energieversorgungsnetz eingespeist wird. Bei solchen Windparks wird darüber hinaus darauf geachtet, dass die einzelnen Windenergieanlagen nicht mit einer zu geringen Distanz zueinander angeordnet sind, damit im ungünstigen Fall nicht eine Anlage direkt im Windschatten einer anderen Anlage steht und somit das vorhandene Windangebot nur suboptimal genutzt wird.

Erfindungsgemäß wird nun ein Windpark vorgeschlagen, der nicht erste Priorität auf eine optimale Wind- und Energieausbeute legt, sondern auf den Schutz eines innerhalb des Windparks liegenden Gebäudes, z.B. eines Atomkraftwerks.

Wie die Geschehnisse des 11. Septembers 2001 in New York gezeigt haben, sind Hochhäuser oder andere unbedingt zu sichernde Gebäude, wie z.B. Atomkraftwerke, nicht oder nur sehr unzureichend gegen den Absturz von Flugverkehrsmaschinen geschützt.

Atomkraftwerke sind zwar darauf ausgelegt, dass auch eine Militärmaschine auf ihnen abstürzen kann, der Absturz von Verkehrsmaschinen mit mehreren Tonnen Kerosin an Bord wurde bislang jedoch noch nicht einmal in Betracht gezogen und so sind bislang auch noch keine Vorkehrungen getroffen worden, Atomkraftwerke ausreichend gegen einen solchen Fall zu schützen, dessen Eintritt nach aller Wahrscheinlichkeitsrechnung zwar gering sein mag, jedoch, wie die Geschehnisse zeigen, nicht ausgeschlossen werden kann. Als Stand der Technik sei auf DE-A-29 28 765 "Schutzeinrichtung für eine Kernkraftwerksanlage" hingewiesen. Das Dokument US-A-4,265,086 offenbart einen "Windzaun" bestehend aus nebeneinander angeordneten Windenergieanlagen vom Vertikaltyp.

Atomkraftwerke verfügen auch bereits über mehrere Betonhüllen, die bei Einwirkung von Gewalt von außen das Gebäude ausreichend schützen sollen. Bei dem gewollten Absturz einer Verkehrsmaschine auf ein solches Gebäude würden jedoch derlei bauliche Schutzmaßnahmen nicht ansatzweise ausreichen, um einen Supergau zu verhindern.

Aus DE 29 28 765 A1 ist eine Schutzeinrichtung für eine Kernkraftwerksanlage bekannt, bei welcher die gesamte Kernkraftwerksanlage durch von außen her kegelförmig aufgespannte Seile umgeben wird.

Auch das Abschalten eines Atomkraftwerks hilft hier nicht weiter, denn auch ein abgeschaltetes Atomkraftwerk hat eine große Menge von Strahlungspotential, welches bei gewaltsamer Zerstörung des Gebäudes freigesetzt und eine Katastrophe ungeahnten Ausmaßes verursachen würde.

Die Erfindung nach Anspruch 1 schlägt nicht nur einen sehr effektiven Schutz gerade solcher Gebäude wie Atomkraftwerke vor, sondern auch eine Maßnahme, die vergleichsweise einfach und vergleichsweise noch zu günstigen Kosten erstellt werden kann, wobei der besondere Vorteil der erfindungsgemäßen Maßnahme auch darin zu sehen ist, dass neben dem Schutz des Gebäudes auch bei entsprechendem Windangebot noch zusätzlich regenerative Energie angeboten und in das Netz eingespeist werden kann, und zwar auch dann, wenn das Atomkraftwerk aus betrieblichen Gründen einmal vom Netz genommen werden muss.

Da Atomkraftwerke regelmäßig im ländlichen Raum angesiedelt sind, ist es auch kein besonderes Problem, dass um sie herum ein Windpark errichtet wird, zumal das um das Atomkraftwerk liegende Gelände regelmäßig dem Atomkraftwerksbetreiber gehört und die Errichtung von Windenergieanlagen dort keinen besonderen Genehmigungsproblemen begegnen dürfte.

Weil darüber hinaus am Ort des Atomkraftwerks auch eine Netzeinspeisung großer Leistung bereits besteht, ist auch die Einspeisung der elektrischen Energie der Windenergieanlagen problemlos und zu äußerst niedrigen (Ausrüstungs-)Kosten möglich.

Besonders geschickt ist es bei dem erfindungsgemäßen Windpark, wenn die Windenergieanlagen des Windparks möglichst dicht zueinander, aber auch zum zu schützenden Gebäude hin angeordnet sind. Dies führt unter Umständen dazu, dass das Windangebot nicht optimal ausgenutzt wird. Allerdings dient der erfindungsgemäße Windpark durch die Anordnung der Windenergieanlagen dem vornehmlichen Zweck, den Schutz des Atomkraftwerkgebäudes zu gewährleisten und nicht etwa den optimalen Energiegewinn bereitzustellen. Selbstverständlich ist die Distanz der Windenergieanlagen zueinander, aber auch zum Gebäude noch so groß, dass in jedem erdenklichen Fall eine Berührung der Rotorblätter der Windenergieanlagen mit anderen Windenergieanlagen oder dem Gebäude sicher ausgeschlossen werden kann.

Bevorzugt beträgt die Nabenhöhe der Windenergienanlagen des erfindungsgemäßen Windparks 80 bis 130 m oder mehr und bevorzugt kommen auch Anlagen mit sehr großer Leistung zum Einsatz, d. h. solche Anlagen, deren Rotordurchmesser 40 m oder mehr, bevorzugt 100 m oder mehr, beträgt.

Würde nunmehr jemand ein Verkehrsflugzeug auf das Atomkraftwerk zusteuern und darauf abstürzen lassen wollen, so müsste dieser erst einmal die Windenergieanlagen überfliegen, denn bereits die Berührung eines Verkehrsflugzeuges mit der Gondel der Windenergieanlage, dem Turm der Windenergieanlage oder auch den Rotorblättern der Windenergieanlage würde automatisch eine Explosion des Flugzeugs nach sich ziehen, so dass die ein Gebäude gefährdenden Explosionen bereits in guter Entfernung von diesem stattfinden würden und nicht mehr direkt im oder auf dem Gebäude.

Da die lichte Höhe von Kernkraftwerken, insbesondere der Reaktorgebäude, regelmäßig im Bereich von 40 bis 50 m liegt, ist es dann, wenn beispielsweise der Abstand des Reaktorgebäudes zum inneren Ring der Windenergieanlagen des Windparks etwa 100 m beträgt, gar nicht mehr möglich, zunächst einmal von außen her die Windenergieanlagen zu überfliegen und dann das Flugzeug auf dem Gebäude des Atomkraftwerks abstürzen zu lassen, da aufgrund der hohen Geschwindigkeit keine sehr steilen Fallwinkel und damit kontrollierten Steilflüge bei Verkehrsmaschinen realisiert werden können.

Besonders bevorzugt sind die Rotorblätter auch mit einem Tarnanstrich versehen, so dass es einem anfliegenden Piloten quasi unmöglich gemacht wird, den rotierenden Rotorblättern gezielt auszuweichen.

Wenn die Windenergieanlagen des Windparks auf ein, zwei, drei oder mehreren gedachten Ringen um das Atomkraftwerkgebäude angeordnet sind, können diese so positioniert werden, dass auch ein Durchfliegen in Turmhöhe der Windenergieanlagen nicht möglich ist.

Ein besonderer Vorteil des erfindungsgemäßen Windparks besteht auch darin, dass die Errichtung eines solchen Gebäudeschutzes durchgeführt werden kann, ohne den aktuellen Betrieb des Atomkraftwerks aufzuhalten, und selbst wenn die Kosten für die Errichtung des Windparks im Bereich von 50 Millionen Euro liegen sollten, ist dieser Betrag vergleichsweise sehr gering zu anderen baulichen Maßnahmen zum Schutz des Atomkraftwerks, wobei derlei bauliche Maßnahmen derzeit noch nicht einmal entwickelt worden sind und deren Entwicklung bereits ein Vielfaches dessen kosten wird, was die Errichtung eines Windparks kosten würde.

Darüber hinaus lassen sich aber auch die Kosten des Windparks dadurch amortisieren, weil durch den Betrieb der Windenergieanlagen auch Strom ins Netz eingespeist wird, welcher vergütet wird und somit der wirksame Gebäudeschutz des Atomkraftwerks nicht mit einer einmaligen Investition teuer erkauft werden muss, sondern sich auch von dieser Seite schon nach recht kurzer Zeit amortisiert.

Bei dem erfindungsgemäßen Windpark ist es vorteilhaft, wenn die Nabenhöhe, also die Höhe der Maschinenträger, in der die Windenergieanlage angeordnet ist, möglichst hoch ist, also beispielsweise 60 m oder mehr, bevorzugt 110 bis 140 m, was technisch (Gittermasten, Betontürme) heute ohne weiteres möglich ist.

Wenn dann auch noch Windenergienanlagen großen Typs zum Einsatz kommen, z.B. vom Typ E-66 (66 oder 70 m Rotordurchmesser) oder E-112 (112 m Rotordurchmesser) der Firma ENERCON, beträgt die Höhe der Windenergieanlage in Zwölf-Uhr-Position eines Rotorblatts ohne weiteres 150 m oder mehr.

Solche großen Windenergieanlagen des vorgenannten Typs haben auch den Vorteil, dass das Maschinenhaus selbst über eine sehr große Masse verfügt, die sogar unter Umständen größer ist als die gesamte Masse des heranfliegenden Flugzeugs, so dass ein Zusammenprall zwischen der Windenergieanlage und dem Flugzeug in jedem Fall zur Totalzerstörung und Explosion des Flugzeugs führen wird.

Wenn ein Verkehrsflugzeug in einem Abstand von etwa 100 bis 250 m vom Atomkraftwerk explodiert, so werden möglicherweise noch viele einzelne Teile des explodierenden Flugzeugs auf das Gebäude fallen, können dies jedoch unter keinen Umständen mehr zerstören, da die Auftreffenergie der einzelnen Teile deutlich unterhalb dessen liegt, wofür das Reaktorgebäude bereits ausgelegt ist.

Zum verbesserten Schutz des gesamten Luftraums um das Atomkraftwerk herum bietet es sich auch an, das einige der Windenergieanlagen (oder alle) des Windparks mit entsprechenden Radarsendern ausgestattet sind, so dass der Luftraum großflächig um das Atomkraftwerk herum auch auf diese Art und Weise beobachtet werden kann und im Falle, dass man auf diese Art und Weise feststellen würde, dass sich ein Verkehrsflugzeug auf Kollisionskurs mit dem Atomkraftwerksgebäude befindet, entsprechend rechtzeitig Maßnahmen ergriffen werden können.

Eine solcher Maßnahmen kann auch das Abschießen von Raketen sein, die am Turm oder auf den oder in den Maschinenträgern (Gondel) der Windenergieanlage angeordnet sind.

Eine weitere der Maßnahmen kann sein, dass bei Feststellung eines Kollisionskurses eines Verkehrsflugzeugs mit dem Atomkraftwerk eine erhöhte Drehzahl der Rotoren zugelassen wird, also eine Drehzahl, welche betriebswirtschaftlich oder aus Sicherheitsaspekten für die Windenergieanlage nicht zugelassen und nicht vorteilhaft ist, die aber die Kollisionswahrscheinlichkeit mit dem Flugzeug erhöht.

Eine weitere Maßnahme kann auch sein, sämtliche Leuchtfeuereinrichtungen oder vergleichbare Maßnahmen im Falle des Feststellens eines Kollisionskurses einer Verkehrsmaschine mit dem Atomkraftgebäude zu deaktivieren.

Im Fall von Windstille kann eine Maßnahme darin bestehen, dass Rotorblätter (regelmäßig drei Rotorblätter für einen Rotor) so angeordnet sind, dass diese eine Sechs-Uhr-, Zehn-Uhr- und Zwei-Uhr-Position einnehmen. Auch die Stellung der Rotorblätter in Zwölf-Uhr-, Vier-Uhr- und Acht-Uhr-Position kann sehr vorteilhaft sein.

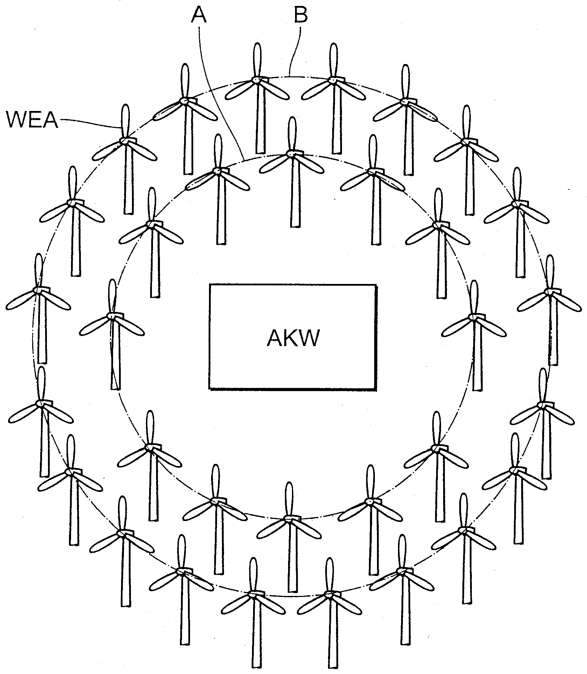

In der Figur ist eine beispielhafte Konzeption eines erfindungsgemäßen Windparks in der Aufsicht zu erkennen.

Dabei sind auf zwei gedachten Ringen A, B um das zu schützende Gebäude herum mehrere Windenergieanlagen mit möglichst geringer Distanz zueinander angeordnet.

Eine weitere Maßnahme zur Erhöhung des Schutzes kann auch darin bestehen, dass in Krisenfällen, also dann, wenn evtl. ein entsprechender Anschlag auf ein Atomkraftwerk zu erwarten ist, die Rotoren der Windenergieanlagen mittels Strom aus dem Versorgungsnetz in Rotation versetzt werden, um somit die gesamte, von dem Rotor überstrichene Fläche als Schutzschild zur Verfügung zu stellen. In einer solchen Situation bietet es sich dann alternativ auch an, die jeweiligen Rotoren der Windenergieanlage so auszurichten, dass sie mit einer maximal möglichen Fläche das zu schützende Gebäude abdecken, so dass also die Azimuteinstellung der Maschinenträger unabhängig von der jeweiligen Windrichtung erfolgt.

Damit auch die aktive Rotation des Rotors mit elektrischer Energie aus dem Stromversorgungsnetz erfolgen kann, muss unter Umständen hierzu ein Wechselrichter vorgesehen werden, mittels dem Energie aus dem Stromversorgungsnetz in der richtigen Art und Weise an Statorwicklungen des Generators herangeführt werden. Dem Fachmann ist aber klar, welche Maßnahmen er zu treffen hat, wenn ihm die Aufgabe gestellt wird, die Rotoren einer Windenergieanlage mittels elektrischer Energie aus dem Versorgungsnetz in Drehung zu bringen.

## Patentansprüche

1. Windpark, bestehend aus einer Vielzahl von Windenergieanlagen (WEA), die eine Nabenhöhe von 60 m oder mehr aufweisen, wobei die Windenergieanlagen um ein zu schützendes Gebäude AKW herum angeordnet sind, wobei zwischen den Windenergieanlagen untereinander eine Distanz liegt, die noch so groß ist, dass eine Berührung der Rotorblätter der Windenergieanlagen mit anderen Windenergieanlagen oder dem zu schützenden Gebäude ausgeschlossen ist und dass das zu schützende Gebäude ein Atomkraftwerk (AKW) ist.

2. Windpark nach Anspruch 1,
**dadurch gekennzeichnet, dass** die Distanz benachbarter Windenergieanlagen so gering ist, dass sie sich bei Ausrichtung der Rotoren der Windenergieanlagen in gleicher Richtung gerade nicht mehr berühren und dann die Distanz zwischen den Rotorblattspitzen der verschiedenen Windenergieanlagen bei größter Annäherung geringer ist als 50 m, vorzugsweise geringer als 5 m.

3. Windpark nach einem der vorhergehenden Ansprüche,
**dadurch gekennzeichnet, dass** die Windenergieanlagen auf wenigstens zwei gedachten Ringen (A, B) um das Gebäude herum angeordnet liegen.

4. Windpark nach einem der vorhergehenden Ansprüche,
**dadurch gekennzeichnet, dass** die Nabenhöhe der Windenergieanlagen 80 m oder mehr, vorzugsweise 120 m oder mehr beträgt.

5. Windpark nach einem der vorhergehenden Ansprüche,
**dadurch gekennzeichnet, dass** bei Windstille oder bei Ausfall einer Windenergieanlage die Rotoren, die drei Rotorblätter aufweisen, so gestellt sind, dass die Rotorblätter sich in Sechs-Uhr-, Zehn-Uhr- und Zwei-Uhr-Position befinden.

6. Windpark nach einem der vorhergehenden Ansprüche,
**dadurch gekennzeichnet, dass** einige der Windenergieanlagen des Windparks mit einem Radarsender ausgerüstet sind, mittels dem der Raum, insbesondere der Luftraum, um den Windpark herum auf Flugbewegungen beobachtet wird.

7. Verwendung einer oder mehrerer Windenergieaniagen in einem Windpark nach einem der vorhergehenden Ansprüche, zum Schutz eines Atomkraftwerkes (AKW).

## Claims

1. A wind farm, consisting of a large number of wind power installations (WEA) which have a hub height of 60 m or more, wherein the wind power installations are arranged about a building which is to be protected (AKW), wherein there is a distance between each of the wind power installations which is still sufficiently great that the rotor blades of the wind power installations touching other wind power installations or the building which is to be protected is ruled out and in that the building which is to be protected is a nuclear power station (AKW).

2. A wind farm according to Claim 1,
**characterised in that** the distance between adjacent wind power installations is so small that when the rotors of the wind power installations are oriented in the same direction they just no longer touch each other and then the distance between the rotor blade tips of the various wind power installations at their closest point is less than 50 m, preferably less than 5 m.

3. A wind farm according to one of the preceding claims,
**characterised in that** the wind power installations are arranged in at least two notional rings (A, B) around the building.

4. A wind farm according to one of the preceding claims,
**characterised in that** the hub height of the wind power installations amounts to 80 m or more, preferably 120 m or more.

5. A wind farm according to one of the preceding claims,
**characterised in that** in the event of a calm in the wind or in the event of stoppage of a wind power installation, the rotors, which have three rotor blades, are positioned in such a way that the rotor blades are in the six o'clock, ten o'clock and two o'clock positions.

6. A wind farm according to one of the preceding claims,
**characterised in that** some of the wind power installations of the wind farm are equipped with a radar transmitter, by means of which the space, in particular the air space, around the wind farm is observed for flight movements.

7. Use of one or more wind power installations in a wind farm according to one of the preceding claims, for protecting a nuclear power station (AKW).

## Revendications

1. Parc éolien constitué d'une pluralité d'éoliennes (WEA), qui présentent une hauteur de moyeu de 60 m ou plus, dans lequel les éoliennes sont disposées tout autour d'un bâtiment à protéger (AKW), dans lequel les éoliennes sont espacées les unes des autres d'une distance, qui reste si grande qu'un contact des pales de rotor des éoliennes avec d'autres éoliennes ou avec le bâtiment à protéger est exclu, et dans lequel le bâtiment à protéger est une centrale nucléaire (AKW).

2. Parc éolien selon la revendication 1,
**caractérisé en ce que** la distance entre les éoliennes voisines est si petite qu'elles ne sont plus en contact précisément lors de l'orientation des rotors des éoliennes dans une direction identique et qu'alors la distance entre les pointes de pale de rotor des différentes éoliennes dans le cas d'un rapprochement plus grand est inférieure à 50 m, de préférence inférieure à 5 m.

3. Parc éolien selon l'une quelconque des revendications précédentes,
**caractérisé en ce que** les éoliennes se situent sur au moins deux cercles (A, B) imaginaires tout en étant disposées tout autour du bâtiment.

4. Parc éolien selon l'une quelconque des revendications précédentes,
**caractérisé en ce que** la hauteur de moyeu des éoliennes présente une valeur de 80 m ou plus, de préférence de 120 m ou plus.

5. Parc éolien selon l'une quelconque des revendications précédentes,
**caractérisé en ce qu'**en cas d'arrêt du vent ou en cas de panne d'une éolienne, les rotors, qui présentent trois pales de rotor, sont placés de telle manière que les pales de rotor se trouvent dans une position à 6 heures, à 10 heures et à 2 heures.

6. Parc éolien selon l'une quelconque des revendications précédentes,
**caractérisé en ce que** certaines des éoliennes du parc éolien sont équipées d'un émetteur radar, au moyen duquel les mouvements aériens dans l'espace, en particulier dans l'espace aérien, tout autour du parc éolien sont observés.

7. Utilisation d'une ou de plusieurs éoliennes dans un parc éolien selon l'une quelconque des revendications précédentes servant à protéger une centrale nucléaire (AKW).
